# EUROPEAN PATENT APPLICATION

(11) **EP 2 108 439 A1**
(43) Date of publication of application: **14.10.2009**
(21) Application number: 09250739.1
(22) Date of filing: 17.03.2009
(51) Int. Cl.: B01D 53/94, B01J 23/63, B01J 37/02

(54) **Catalytic diesel particulate filter and manufacturing method thereof**

(30) Priority: 27.03.2008 JP 2008083440
(71) Applicant: NGK INSULATORS, LTD., Nagoya-city, Aichi 467-8530 (JP)
(72) Inventor: Mizutani, Takashi, Nagoya City Aichi-ken 467-8530 (US); Saito, Chika, Nagoya City Aichi-ken 467-8530 (US)
(74) Representative: Paget, Hugh Charles Edward

(57) **Abstract**

There are provided a catalytic diesel particulate filter that is arranged in an exhaust system of a diesel engine and includes a catalyst that burns a particulate matter contained in an exhaust gas from the diesel engine, wherein the catalyst is configured in such a manner that a ceria based catalyst coat layer 6 containing no noble metal and a noble metal based catalyst coat layer 11 containing a noble metal are separately provided on a substrate constituted of a honeycomb structure, and a method for producing the same.

## Description

### BACKGROUND OF THE INVENTION

### 1. Field of the Invention

The present invention relates to a catalytic diesel particulate filter that is utilize to collect or purify particulates included in an exhaust gas emitted from an internal combustion engine such as a diesel engine or various kinds of combustion apparatuses, and a manufacturing method of the catalytic diesel particulate filter.

### 2. Description of the Related Art

An exhaust gas emitted from an internal combustion engine such as a diesel engine or various kinds of combustion apparatuses (which will be appropriately referred to as "e.g., an internal combustion engine" hereinafter) contains a large amount of particulate materials (which will be appropriately referred to as "particulate matters" or "PMs" hereinafter) including soot (graphite) as a main constituent. Since environmental contamination occurs when the particulates are discharged into air as they are, a filter that collects particulates is generally provided in an exhaust gas flow passage from, e.g., an internal combustion engine.

As a filter used for such a purpose, there is, e.g., a honeycomb filter that is constituted of a honeycomb structure having a plurality of cells serving as gas flow passages partitioned by a partition wall formed of a porous ceramics having many pores and has a configuration where one open end portions and the other end portion of each of the plurality of cells are plugged by a plugging portion (plugging). Further, in recent years, there is utilized a honeycomb filter including a diesel particulate filter with a catalyst, e.g., an oxidation catalyst that facilitates oxidation (combustion) of particulates (which will be appropriately referred to as "catalytic diesel particulate filter" hereinafter).

Meanwhile, as a conventional honeycomb filter, there is one that is constituted of a honeycomb structure having a plurality of cells serving as gas flow passages partitioned by a partition wall formed of a porous ceramics having many pores and has a configuration where one open end portions and the other end portion of each of the plurality of cells are plugged by a plugging portion. In this conventional honeycomb filter, open portions of pores formed on an inlet side of the partition wall are coated with a catalyst, and a gas flows in from the open portions of the pores and flows out to a flow passage of an adjacent cell through open portions of pores formed on an outlet side of the partition wall. As explained above, in the conventional filter, when an exhaust gas is flowed in from an exhaust gas inlet cell, particulates in the exhaust gas are caught by the partition wall while the exhaust gas passes through the partition wall, a purified gas from which the particulates are removed flows out from an outlet cell, an oxidation catalyst supported on a surface of the partition wall of the honeycomb filter and inner surfaces of the pores present in the partition wall facilitates oxidation (combustion) of the particulates, whereby the particulates in the exhaust gas can be reduced, thus enabling effectively purifying the exhaust gas.

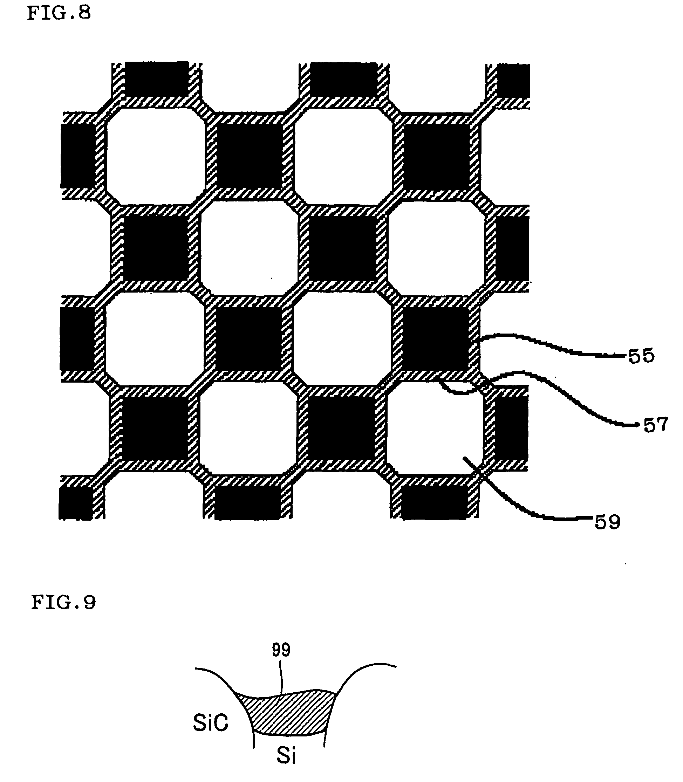

However, in the structure of such a conventional honeycomb filter, As shown in FIG.9, a layer formed of a catalyst supported as a catalytic diesel particulate filter consisting of a porous ceramics that can assuredly collect particulates contained in an exhaust gas is present in close proximity to the same layer as a mixed layer 99 coated with a mixture of a ceria based catalyst and a noble metal based on, e.g., Pt. Therefore, there occurs a problem that soot or an unburned gas is incompletely combusted.

That is, in the conventional honeycomb filter, since O₂ is consumed for an on oxidative reaction of HC, CO, or NO with a Pt catalyst when the Pt based catalyst presents close to a ceria based catalyst, a concentration of O₂ near the ceria based catalyst required to burn soot is low, and hence soot combustion is not sufficiently carried out. That is because an activation energy of an oxidative reaction with Pt is lower. Therefore, in a layer in which a catalyst based on a noble metal such as Pt presents close to a ceria based catalyst, a distance between these catalysts is too short, a soot amount combustion capability of the ceria based catalyst cannot be exploited to the utmost extent, and a soot combustion speed cannot be increased.

Thus, in the conventional honeycomb filter, since oxidation (combustion) of particulates cannot be sufficiently facilitated and the particulates in the exhaust gas cannot be reduced, the particulates are deposited on a surface of the partition wall on the exhaust gas inlet cell side in a relatively short time, a filter regenerative operation (an operation of removing the deposited particulates by, e.g., backwashing or heating) must be frequently carried out, and hence the conventional honeycomb filter is insufficient.

There are the following Patent Documents 1 and 2 with respect to such a problem.

In Patent Document 1, an active oxygen generating particulate layer and a catalyst support layer are separately formed to prevent PM particles from being excessively deposited on a filter outer surface, but catalytic properties are not sufficiently exploited in the active oxygen generating particulate layer where soot is combusted due to a local reduction in oxygen concentration, a soot combustion speed is insufficient, and an improvement in regeneration efficiency may be also possibly obstructed.

In Patent Document 2, a ceria based material and a noble metal are constituted as catalyst layers used for the same layer in order to increase a particulate combustion speed, improve an exhaust gas purification capability, and enable regeneration at a low temperature. However, such a structure is directly affected by a local oxygen concentration, and a soot high burnup function as a latent function of ceria cannot be sufficiently exploited. That is, it should be said that this structure hardly improves a particulate combustion speed and cannot sufficiently enhance an exhaust gas purification capability or a regeneration efficiency.

As explained above, both Patent Documents 1 and 2 do not disclose a satisfactory countermeasure, the above-explained problem is not solved. Besides, there is a technology that solves the problem by providing a providing a fibrous materia on an exhaust gas inlet side, but such a technology has a problem in durability and is insufficient to solve the above-explained problem, and hence a further improvement is demanded.

[Patent Document 1] JP-A-2007-111660
[Patent Document 2] JP-A-2007-218219

### SUMMARY OF THE INVENTION

In view of the above-explained problems in the conventional technology, it is an object of the present invention to provide a diesel particulate filter that can take oxygen into particles from many portions through a noble metal, supply the taken-in oxygen to a portion having a low oxygen concentration, and improve low-temperature activity of a catalyst by a structure where a ceria based catalyst coat layer including no noble metal and a noble metal based catalyst coat layer including the noble metal are separately present, and to provide a manufacturing method of a diesel particulate filter. Among others, the object of the present invention is to provide a diesel particulate filter that can further readily take oxygen into particles from many portions through the noble metal, further easily supply the taken-in oxygen to a portion having a low oxygen concentration, and improve low-temperature activity of a catalyst since a double oxide of Ce, at least one alkaline-earth metal excluding Ce, and the noble metal is contained, and to provide a manufacturing method of a diesel particulate filter..

The present invention provides the following diesel particulate filter and a manufacturing method thereof.

[1] A catalytic diesel particulate filter that is arranged in an exhaust system of a diesel engine and includes a catalyst that burns a particulate matter contained in an exhaust gas from the diesel engine, wherein the catalyst is configured in such a manner that a ceria based catalyst coat layer containing no noble metal and a noble metal based catalyst coat layer containing a noble metal are separately present on a substrate constituted of a honeycomb structure.

[2] The diesel particulate filter according to [1], wherein each of the ceria based catalyst coat layer and the noble metal based catalyst coat layer is a washcoat layer supported by a metal oxide.

[3] The diesel particulate filter according to [1], wherein a portion where the ceria based catalyst coat layer is covered with the noble metal based catalyst coat layer, a portion where the ceria based catalyst coat layer and the noble metal based catalyst coat layer are partially in contact with each other, and a portion where the ceria based catalyst coat layer and the noble metal based catalyst coat layer are not in contact with each other are present.

[4] The diesel particulate filter according to any one of [1] to [3], wherein the ceria based catalyst coat layer and the noble metal based catalyst coat layer are separately present on an SiO₂ film.

[5] The diesel particulate filter according to any one of [1] to [4], wherein the ceria based catalyst coat layer contains CeO₂ and at least one alkaline-earth metal other than CeO₂ or a transition metal.

[6] The diesel particulate filter according to any one of [1] to [5], wherein the substrate constituted of the honeycomb structure includes many through holes that are partitioned by a partition wall and pass through in an axial direction.

[7] The diesel particulate filter according to any one of [1] to [5], wherein the substrate constituted of the honeycomb structure is formed of an assembled articles obtained by integral bonding through a bonding material a plurality of honeycomb segments having many through holes that are partitioned by a partition wall and pass through in an axial direction.

[8] The diesel particulate filter according to [6] or [7], wherein open portions of predetermined through holes are plugged at end faces on one side, and open portions of some or all of the remaining through holes are plugged at end faces on the other side.

[9] The diesel particulate filter according to any one of [6] to [8], wherein the diesel particulate filter has a structure in which an open area of inlet-side through holes is larger than an open area of outlet-side through holes.

[10] The diesel particulate filter according to any one of [6] to [9], wherein a cross section of each inlet-side through hole vertical to the axial direction has an octagonal shape, and a cross section of each outlet-side through hole vertical to the axial direction has a square shape.

[11] The diesel particulate filter according to any one of [1] to [10], wherein the substrate constituted of the honeycomb structure is one selected from a group including silicon carbide, cordierite, aluminum titanate, and mullite.

[12] The diesel particulate filter according to any one of [1] to [11], wherein the substrate constituted of the honeycomb structure has a porosity of 40 to 80% and an average pore diameter of 5 to 80 µm.

[13] A manufacturing method of a catalytic diesel particulate filter, comprising: coating a substrate constituted of a honeycomb structure with a ceria based catalyst containing no noble metal to form a coat layer; drying the coat layer; and coating the coat layer with a catalyst containing a noble metal.

[14] The manufacturing method of a catalytic diesel particulate filter according to [13], wherein the coat layer is coated with the catalyst containing a noble metal after the coat layer is dried and then calcined to be fixed.

According to the present invention, since the ceria based catalyst coat layer including no noble metal and the noble metal based catalyst coat layer including a noble metal are separately present, it is possible to provide the diesel particulate filter that can take oxygen into particles from many portions through the noble metal, supply the taken-in oxygen to a portion having a low oxygen concentration, and improve low-temperature activity of the catalyst, and also provide the manufacturing method of a diesel particulate filter. Above all, it is possible to provide the diesel particulate filter that can further take oxygen into particles from many portions through the noble metal, further supply the taken-in oxygen to a portion having a low oxygen concentration, and can improve low-temperature activity of the catalyst since a double oxide of Ce, at least one alkaline-earth metal excluding Ce, and the noble metal is contained, and also provide the manufacturing method of a diesel particulate filter.

### BRIEF DESCRIPTION OF THE DRAWINGS

FIG. 1 is a schematic view showing a diesel particulate filter to which an embodiment according to the present invention is applied, which is a perspective view of a catalytic diesel particulate filter;
FIG. 2 is a schematic view of the catalytic diesel particulate filter depicted in FIG. 1, which is a plan view of a ceramic filter;
FIG. 3 is a cross-sectional view showing a cross section of the catalytic diesel particulate filter depicted in FIG. 1 in an axial center direction (a lengthwise direction), which is a schematic view showing a state where an exhaust gas flows from one open end portion to the other open end portion or vice versa;
FIG. 4 is a partially enlarged schematic view of a partition wall at a point P depicted in FIG. 3;
FIG. 5A is a schematic view of another embodiment of a catalytic diesel particulate filter according to the present invention, which is a view schematically showing an example of a supported catalyst layer in which a cross section of a partition wall is partially enlarged;
FIG. 5B is a schematic view showing still another embodiment of a catalytic diesel particulate filter according to the present invention, which is a view schematically showing an example of a supported catalyst layer in which a cross section of a partition wall is partially enlarged;
FIG. 5C is a schematic view showing yet another embodiment of a catalytic diesel particulate filter according to the present invention, which is a view schematically showing an example of a supported catalyst layer in which a cross section of a partition wall is partially enlarged;
FIG. 5D is a schematic view showing a further embodiment of a catalytic diesel particulate filter according to the present invention, which is a view schematically showing an example of a supported catalyst layer in which a cross section of a partition wall is partially enlarged;
FIG. 6A is a view schematically showing a honeycomb segment used in the catalytic diesel particulate filter according to the present invention;
FIG. 6B is a perspective view schematically showing a state where the plurality of honeycomb segments depicted in FIG. 6A are used to form the catalytic diesel particulate filter according to the present invention;
FIG. 6C is a plan view schematically showing the catalytic diesel particulate filter according to the present invention depicted in FIG. 6B;
FIG. 7A is a schematic view showing another embodiment of a catalytic diesel particulate filter according to the present invention, which is a plan view of a outlet end face side;
FIG. 7B is a schematic view showing another embodiment of the catalytic diesel particulate filter according to the present invention, which is a plan view of an inlet end face side;
FIG. 8 is a view showing yet another embodiment of the catalytic diesel particulate filter according to the present invention, which is a view schematically showing through holes in which each inlet-side through hole has an octagonal cross-sectional shape vertical to an axial direction and each outlet-side through hole has a square cross-sectional shape vertical to the axial direction;
FIG. 9 is a schematic view showing a conventional catalytic diesel particulate filter, which is a view schematically showing an example of a supported catalyst layer in which a cross section of a partition wall is partially enlarged;
FIG. 10 is a view schematically showing an embodiment of a catalytic diesel particulate filter according to the present invention, which is a partially enlarged front view for explaining an offset and a thickness of a partition wall; and
FIG. 11 is a view schematically showing another embodiment of a catalytic diesel particulate filter according to the present invention, which is a partially enlarged front view for explaining an offset and a thickness of a partition wall.

### [Description of Reference Numerals]

1: diesel particulate filter, 3: cell (through hole), 4: partition wall, 5: ceria based catalyst, 6: ceria based catalyst coat layer, 8: noble metal based catalyst, 10: plugging, 11: noble metal based catalyst coat layer, 12: pore, 30: honeycomb structure, 32: porous partition wall, 33: through hole, 35: cell structure, 37: outer peripheral wall, 38: bonding layer, 42: honeycomb segment, 44: inflow end face, 46: inlet-side through hole, 48: outlet end face, 50: outlet-side through hole, 51: cell, 52: partition wall, 99: mixed layer, and G, G₁, and G₂: exhaust gas.

### DETAILED DESCRIPTION OF THE PREFERRED EMBODIMENTS

The best mode for carrying out a diesel particulate filter according to the present invention will now be specifically explained hereinafter. However, the present invention extensively includes diesel particulate filters provided with features of the present invention and is not restricted to the following embodiments.

### [1] Diesel Particulate Filter according to Present Invention:

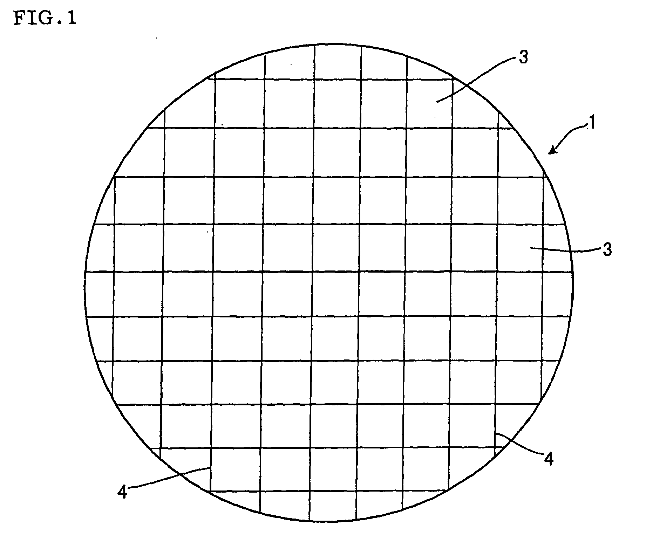

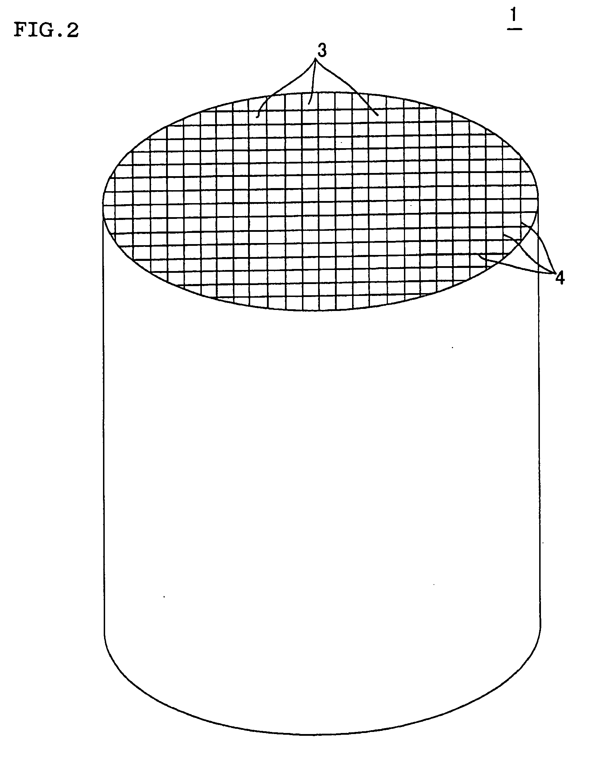

As shown in FIGS. 1 to 4, a diesel particulate filter according to the present invention is a catalytic diesel particulate filter 1 that is arranged in an exhaust system of a diesel engine and includes a catalyst that burns particulate matters included in an exhaust gas from the diesel engine. The catalyst is configured in such a manner that a ceria based catalyst coat layer 6 including no noble metal and a noble metal based catalyst coat layer 11 including a noble metal are separately present on a substrate constituted of a honeycomb structure.

### [1-1] Diesel Particulate Filter:

The diesel particulate filter according to this embodiment is constituted as a filter that collects a particulate substance (which will be appropriately referred to as a "particulate matter" or a "PM" hereinafter) including soot (graphite) as a main constituent emitted from an internal combustion engine, e.g., a diesel engine or various kinds of combustion apparatuses (which will be appropriately referred to as "e.g., an internal combustion engine" hereinafter). A more preferable filter is a honeycomb filter that is formed of a honeycomb structure having a plurality of cells 3 serving as gas flow passages partitioned by a partition wall 4 formed of a porous ceramics having many pores 12 in order to collect PMs, one open end portion and the other end portion of each of the plurality of cells being alternately plugged by a plugging portion (see FIGS. 1 to 4).

### [1-2] Catalyst:

It is desirable for the catalyst in this embodiment to be configured in such a manner that the ceria based catalyst coat layer including no noble metal and the noble metal based catalyst coat layer including a noble metal are separately present on the substrate constituted of the honeycomb structure. When the ceria based catalyst coat layer including no noble metal and the noble metal based catalyst coat layer including the noble metal are separately present, an O₂ concentration near a ceria based catalyst required to burn soot can be increased, thereby sufficiently burning soot. That is, oxygen can be taken into particles from many portions through the noble metal, and the taken-in oxygen can be supplied to a portion having a low oxygen concentration. Therefore, a soot amount combustion capability of the ceria based catalyst can be exploited to the utmost extent, a soot combustion speed can be increased, and low-temperature activity of the catalyst can be improved.

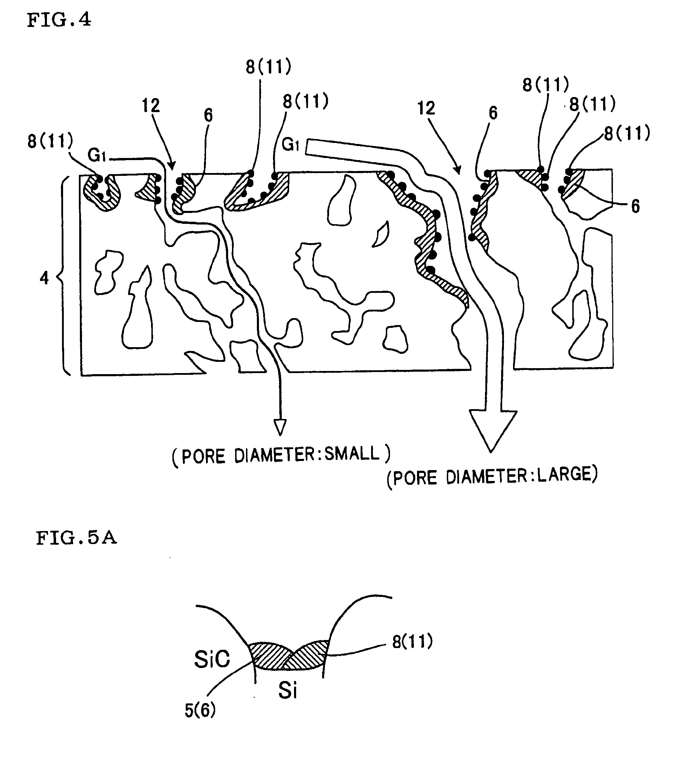

Specifically, as shown in FIG. 4, it is desirable for the ceria based catalyst coat layer 6 containing no noble metal and the noble metal based catalyst coat layer 11 containing the noble metal to be separately present.

### [1-2-1] Ceria Based Catalyst Coat Layer:

The ceria based catalyst coat layer is configured without containing a noble metal. When the ceria based catalyst coat layer contains a noble metal such as Pt, O₂ is consumed by the noble metal such as Pt for an oxidation reaction of, HC, CO, or NO since the noble metal, e.g., Pt is too close to the ceria based catalyst, an O₂ concentration near the ceria based catalyst required to burn soot is lowered, and soot combustion is not sufficiently carried out. Therefore, as explained above, when a distance between the noble metal, e.g., Pt and the ceria based catalyst is increased, a soot amount combustion capability of the ceria based catalyst can be exploited to the utmost, a soot combustion speed can be increased, and a regeneration efficiency can be improved.

This ceria based catalyst undertakes a role as an OSC (Oxygen Storage Component) material that occludes oxygen in an exhaust gas when an oxygen concentration in the exhaust gas is high and discharges oxygen when the oxygen concentration is lowered based on formation of a layer consisting of a ceria based catalyst.

It is more preferable for the ceria based catalyst coat layer to be formed as a washcoat layer supported by a metal oxide. When such a structure is adopted, a surface area of the ceria based catalyst can be increased, and a contact area with respect to the exhaust gas can be enlarged, thereby further easily demonstrating the role as the OSC material.

Here, "the washcoat layer" usually means a layer formed to be supported by a porous cell structure by a washcoat method. Specifically, when a ceria based catalyst slurry formed of a ceria based catalyst component and water is used and a substrate constituted of a honeycomb structure is filled with this ceria based catalyst slurry, moisture in the slurry is absorbed into the substrate, a catalyst component as a solid component in the slurry is consolidated on a substrate inner surface and in pores opened in the substrate inner surface by a water absorption force at this moment. Above all, in the substrate formed of the honeycomb structure having later-explained porous cells, when the porous cell structure is filled with this ceria based catalyst slurry containing the ceria based catalyst component or a noble metal based catalyst slurry, moisture in the slurry is absorbed into pores in a partition wall, and the catalyst component as a solid component in the slurry is consolidated on a partition wall surface and in pores formed in the partition wall surface by a water absorption force at this moment. At this time, it can be considered that a support amount of the catalyst component is in proportion to a water absorption amount of the cell structure.

As the metal oxide, for example, there is specifically alumina (Al₂O₃), silica (SiO₂), titania (TiO₂), or zirconia (ZrO₂), and each of these materials can be solely used, or combinations of these materials can be used.

As an amount of the metal oxide for coating, 0.1 to 20 mass% is preferable and 1 to 10 mass% is more preferable with respect to a support. Further, a transition metal and/or a noble metal can be also supported. Specifically, there are a transition metal such as Ni, Fe, Co, or Mn and a noble metal such as Pt, Rh, Pd, Ru, or Ag. An amount of the metal to be supported is 0.1 to 20 mass% and more preferably 1 to 10 mass% with respect to the metal oxide. Each of these metals can be solely used, or combinations of these metals can be used.

### [1-2-2] Noble Metal Based Catalyst Coat layer:

The noble metal based catalyst coat layer is configured to contain a noble metal. When the noble metal based catalyst coat layer is configured to contain a noble metal such as Pt, emitted active oxygen is efficiently utilized for an oxidation reaction of particulates based on Pt in the layer coated with a noble metal based catalyst that is based on Pt at the moment particulates adhere to the noble metal based catalyst that is based on Pt, thereby facilitating combustion of the particulates. That is, a combustion start temperature of the particulates is lowered, which becomes advantageous for a reduction in a filter regeneration time and an improvement in fuel consumption.

A more preferable point is that the noble metal based catalyst coat layer is formed as a washcoat layer supported by a metal oxide. When such a structure is adopted, a surface area of the noble metal based catalyst can be increased, and a contact area with respect to the exhaust gas can be enlarged, whereby oxidation processing (combustion) of particulates is facilitated, which is preferable.

Here, the "washcoat layer" usually means a layer formed to be supported by a porous cell structure by the washcoat method. Specifically, when a noble metal based catalyst slurry formed of a noble metal based catalyst component and water is used and a substrate constituted of a honeycomb structure is filled with this noble metal based catalyst slurry, moisture in the slurry is absorbed into the substrate, a catalyst component as a solid component in the slurry is consolidated on a substrate inner surface and in pores opened in the substrate inner surface by a water absorption force at this moment. Above all, in the substrate formed of the honeycomb structure having later-explained porous cells, when the porous cell structure is filled with this noble metal based catalyst slurry containing the noble metal based catalyst component, moisture in the slurry is absorbed into pores in a partition wall, and the catalyst component as a solid component in the slurry is consolidated on a partition wall surface and in pores formed in the partition wall surface by a water absorption force at this moment. At this time, it can be considered that a support amount of the catalyst component is in proportion to a water absorption amount of the cell structure.

As the metal oxide, for example, there is specifically alumina (Al₂O₃), silica (SiO₂), titania (TiO₂), or zirconia (ZrO₂), and each of these materials can be solely used, or combinations of these materials can be used.

As an amount of the metal oxide for coating, 0.1 to 20 mass% is preferable and 1 to 10 mass% is more preferable with respect to a support. Further, a transition metal and/or a noble metal can be also supported. Specifically, there are a transition metal such as Ni, Fe, Co, or Mn and a noble metal such as Pt, Rh, Pd, Ru, or Ag. An amount of the metal to be supported is 0.1 to 20 mass% and more preferably 1 to 10 mass% with respect to the metal oxide. Each of these metals can be solely used, or combinations of these metals can be used.

### [1-2-3] Relationship between Ceria Based Catalyst Coat Layer and Noble Metal Based Catalyst Coat Layer:

Moreover, it is further preferable that a portion where the ceria based catalyst coat layer is covered with the noble metal based catalyst coat layer, a portion where a part of the ceria based catalyst coat layer is in contact with a part of the noble metal based catalyst coat layer, and a portion where the ceria based catalyst coat layer is not in contact with the noble metal based catalyst coat layer are present. When a function of the catalyst is promoted and variations of a support pattern of the catalyst are expanded, specifically, control over a regeneration temperature can be facilitated, and the DPF that can extensively cope with a purpose, a function, characteristics, and others and demonstrate the effect of the present application can be provided, which is preferable. Among others, when the ceria based catalyst coat layer contains the double oxide having at least one of Mg, Ca, Sr, and Ba as alkaline-earth metals, the effect of the present application can be further obtained.

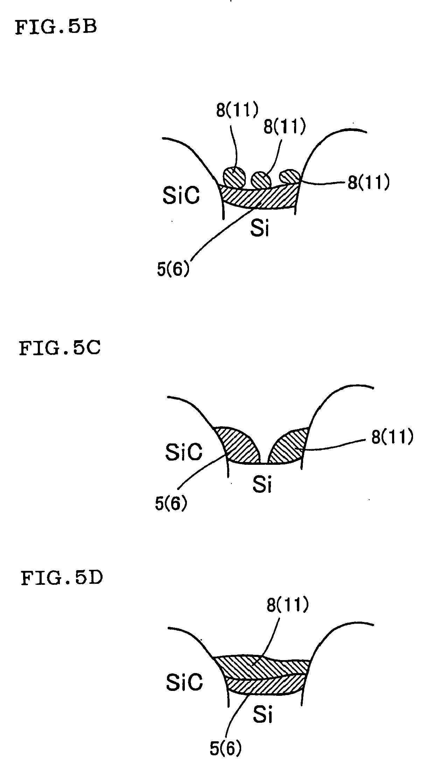

For example, it is possible to form a coat layer having a portion where the ceria based catalyst coat layer 6 is covered with the noble metal based catalyst coat layer 11 as shown in FIG. 5A, a portion where the ceria based catalyst coat layer 6 is in contact with a part of the noble metal based catalyst coat layer 11 as shown in FIG. 5B, and a portion where the ceria based catalyst coat layer 6 is not in contact with the noble metal based catalyst coat layer 11 as shown in FIG. 5C. Further, the present invention is not restricted to the coat layer formed of combinations of structures depicted in FIGS. 5A to 5C, and a coat layer formed of the structure shown in FIG. 5A alone, that shown in FIG. 5B alone, or that shown in FIG. 5C alone may be formed.

Furthermore, a structure where the ceria based catalyst coat layer 6 and the noble metal based catalyst coat layer 11 are separately present on an SiO₂ film as shown in FIG. 5D is one preferred conformation. When a function of the catalyst is promoted and variations of a support pattern of the catalyst are expanded, specifically, control over a regeneration temperature is facilitated, and the DPF that can cope with a purpose, a function, characteristics, and others and demonstrate the effect of the present application can be provided, which is preferable. Among others, the double oxide is obtained by firing a double oxide precursor that is acquired by mixing an acid solution containing a Ce ion, at least transition metal ion excluding the Ce ion or at least one alkaline-earth metal ion, and a noble metal ion with a basic solution and coprecipitating this mixture. This double oxide can be arranged in, e.g., a state where a noble metal such as Pt is dispersed on a surface of a crystallite, and the noble metal can be suppressed from aggregating and being sintered. Therefore, the effect of the present application can be further demonstrated, which is preferable.

Additionally, it is also preferable that the ceria based catalyst coat layer contains CeO₂ and at least one alkaline-earth metal other than CeO₂ or a transition metal. That is because oxygen can be taken into particles from many portions through the noble metal, and the taken-in oxygen can be supplied to a portion having a low oxygen concentration. Further, the double oxide emits active oxygen to a portion where it is in contact with PMs to increase a PM combustion speed for burning the PMs, which is preferable.

It is preferable for the transition metal to be selected from Sm, Gd, Nd, Y, Zr, La, Pr, Ti, Mn, Fe, Co, Ni, and Cu.

It is preferable for the alkaline-earth metal to be selected from Mg, Ca, Sr, and Ba.

Furthermore, as a mass ratio of the transition metal with respect to Ce, a value that is equal to or above 0.1% and less than 99.0% is preferable. As a mass ratio of the alkaline-earth metal with respect to Ce, a value that is equal to or above 0.01 and less than 99.0 is preferable. When the mass ratios are adjusted to desired values in this manner, a reaction function of solid phase and oxygen become sufficient, or satisfactory durability can be assured. In other words, when the mass ratio of each of the transition metal and the alkaline-earth metal is smaller than 0.1%, the reaction function of solid phase and oxygen are not sufficient. When the same is higher than 99.0%, thermal durability is not satisfactory.

Moreover, as the noble metal catalyst, there is, e.g., Pt, Pd, or Rh. In the noble metal such as Pt, Pd, or Rh, since each d electron present in the outermost shell of an atom is easily covalently attached to oxygen and hydrogen atoms, a catalyst containing such a noble metal can exercise high activity in an oxidation-reduction reaction of an unburned gas (HC, CO, or NO).

Additionally, it is preferable for the noble metal catalyst to be supported by a metal oxide such as an alumina. Specifically, as a support amount of the noble metal catalyst, a range of 1 to 95 wt% is preferable. When the support amount is smaller than this range, an effect is not obtained. When the support amount exceeds this range, a coat amount becomes too high, a pressure loss may possibly occur. Further, it is preferable for a diameter of the noble metal particle to fall within a range of 2 to 50 nm. When such a desired particle diameter is adopted, the catalyst can be efficiently brought into contact with the exhaust gas, and the effect of the present application can be demonstrated, which is preferable. It is to be noted that an average particle diameter of a raw material can be measured based on JIS R 1629.

### [1-3] Honeycomb Structure:

Furthermore, it is preferable for the substrate formed of the honeycomb structure to include many through holes that are partitioned by the partition wall and pass through in the axial direction. For example, as shown in FIGS. 1 to 4, when the substrate is formed into a honeycomb structure having the plurality of cells 3 serving as gas flow passages partitioned by the partition wall 4 consisting of a porous ceramics having many pores 12, the ceria based catalyst coat layer 6 including no noble metal and the noble metal based catalyst coat layer 11 including the noble metal can readily cooperate with each other, a purification capability can be improved, and a regeneration efficiency can be greatly increased.

Moreover, it is preferable for the substrate having the honeycomb structure to be formed of an assembled article obtained by integral bonding through a bonding material a plurality of honeycomb segments having many through holes that are partitioned by the partition wall and pass through in the axial direction. When the bonded structure is adopted, even if a complicated thermal stress is generated due to the fact that the ceria based coat layer including no noble metal and the noble metal based catalyst coat layer including the noble metal are separately present, the bonding material can absorb the thermal stress, and occurrence of cracks in the substrate can be assuredly suppressed, thereby universally demonstrating the effect of the present application.

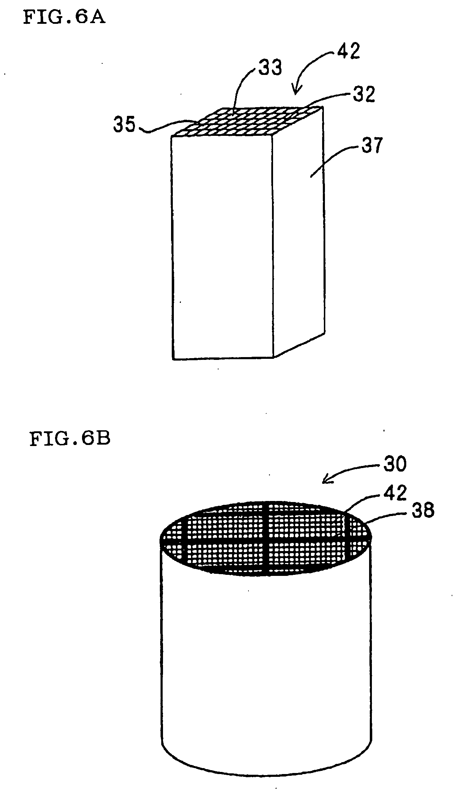

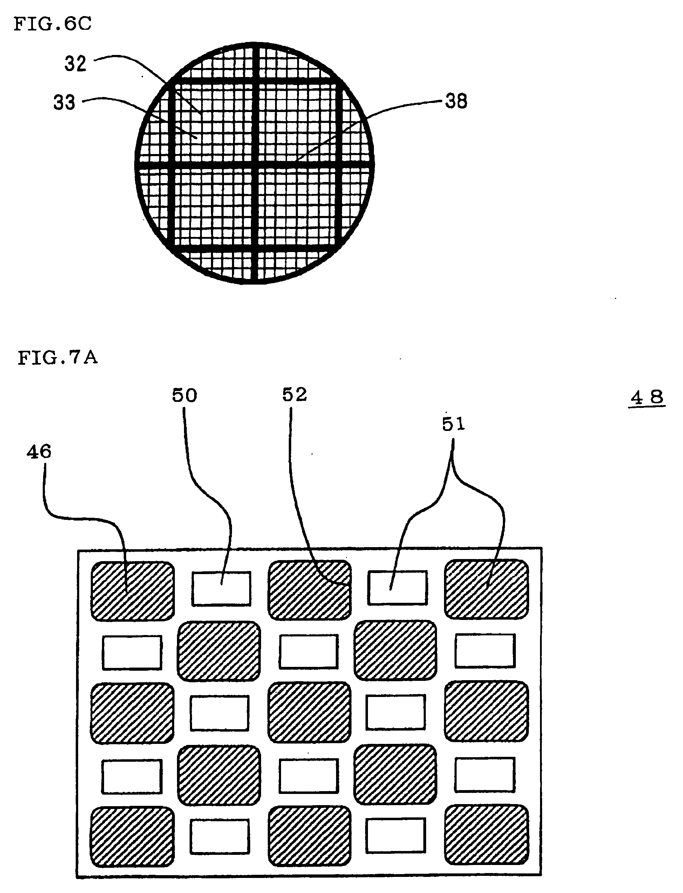

For example, as shown in FIG. 6A, it is preferable to prepare a plurality of honeycomb segments 42 having many through holes 33 passing through in the axial direction and fabricate a substrate having the honeycomb structure formed of an assembled article integral bonded through a bonding material as depicted in FIGS. 6B and 6C. In regard to this integral bonding, the bonding material is applied to an outer peripheral wall 37 (see FIG. 6A) of each honeycomb segment 42, and such a bonding layer 38 as shown in FIG. 6B is formed to fabricate the substrate. It is to be noted that there is, e.g., a ceramic cement as the bonding material to be used, but the present invention is not restricted thereto, and known bonding materials can be extensively utilized.

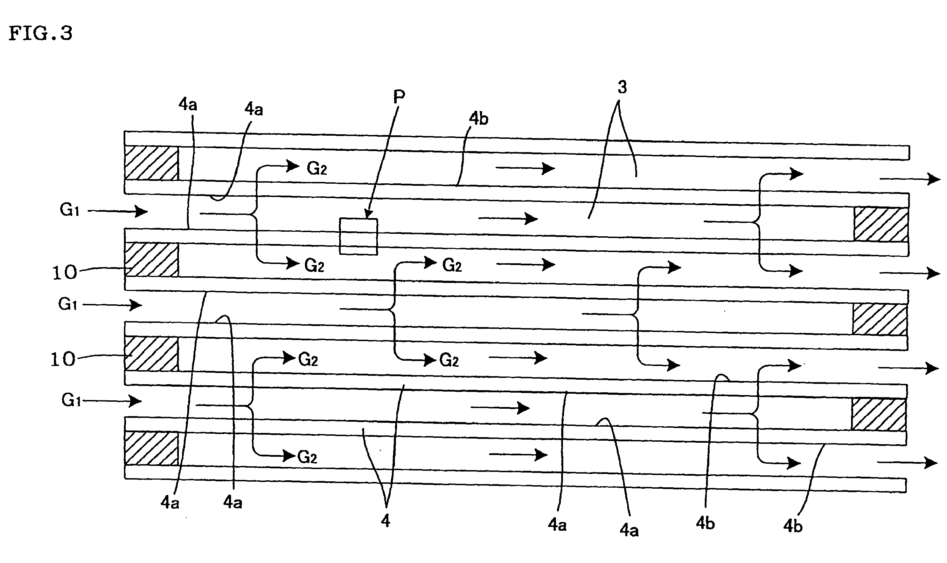

Further, it is preferable that each of open portions of predetermined through holes is plugged on one end face and each of open portions of some or all of the remaining through holes is plugged on the other end face. That is because assuredly bringing the exhaust gas to come into contact with the catalyst coating the porous partition wall enables further exercising the effect of the present application. Specifically, as shown in FIG. 3, it is preferable to perform forming in such a manner that each of the open portions of the through holes 3 is plugged on one end face (see reference numeral 10) and each of the open portions of some or all of the remaining through holes 3 is plugged on the other end face (see reference numeral 10).

Although a material forming the plugging is not restricted in particular, one selected from a group including cordierite, silicon-silicon carbide, recrystallized silicon carbide, an alumina titanate, mullite, silicon nitride, sialon, and alumina is preferable, and cordierite and silicon-silicon carbide are preferable among others. However, it is more preferable that the plugging is formed of the same material as that of the partition wall. Furthermore, a depth of the plugging entering each cell from the end face of the honeycomb structure is not restricted in particular, but a range of 1 to 10 mm is preferable in terms of a reduction in pressure loss, spread of catalyst effective area, and an increase in intensity.

Moreover, it is preferable for an open area of each inlet-side through hole to be larger than an open area of each outlet-side circulation hole. Here, the structure where the open area of the inlet-side through hole is larger than the open area of the outlet-side through hole, i.e., a structure where an inlet cell capacity can be increased by enlarging an effective filtration area of the partition wall is adopted (which will be appropriately referred to as a "structure having a high inlet cell capacity" hereinafter), a large amount of particulates can be collected, and a passage flow rate of the exhaust gas in a passage hole can be readily controlled, thereby facilitating adjustment of a soot amount that can be stored in the through holes. Therefore, fine control over, e.g., an increase in temperature at the time of regeneration can be performed.

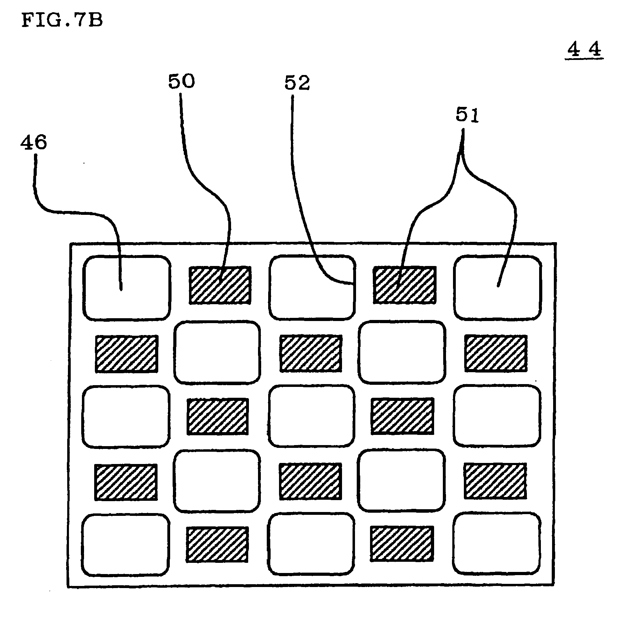

Specifically, as shown in FIGS. 7A and 7B, a structure where an open area of each inlet-side through hole 46 on an inlet end face 44 is larger than an open area of each outlet-side through hole 50 on an outlet end face 48 is preferable.

Additionally, it is preferable that a cross section of the inlet-side through hole in a direction vertical to the axial direction has an octagonal shape and a cross section of the outlet-side through hole in the direction vertical to the axial direction has a square shape. When a cross-sectional area of the inlet-side through hole is changed and a cross-sectional area of the outlet-side through hole is changed, an open area ratio can be easily fluctuated, thereby obtaining an effect enabling a reduction in pressure loss.

Incidentally, it can be said that such a structure where the cross section of the inlet-side through hole in the direction vertical to the axial direction has the octagonal shape and the cross section of the outlet-side through hole in the direction vertical to the axial direction has the square shape is also a structure that can increase the inlet cell capacity, i.e., the structure having the high inlet cell capacity, a large amount of particulates can be collected, and a passage flow rate of the exhaust gas in the passage hole can be readily controlled, thus facilitating adjustment of a soot amount that can be stored in the through holes.

Specifically, as shown in FIG. 8, the present invention is formed in such a manner that the cross section of each through hole through which the exhaust gas flows out has the square shape and each through hole 59 which is adjacent to each through hole 55 to sandwich a surface of a partition wall 57 therebetween and through which the exhaust gas flows in has the octagonal shape. Such a conformation likewise has an advantage that a cross-sectional are of each through hole through which a processing target fluid flows in can be increased, creation of a die can be facilitated, and formability is also excellent.

Further, it is preferable that the substrate constituted of the honeycomb structure is one selected from a group including silicon carbide, cordierite, aluminum titanate, and mullite. Among others, a substrate formed of a silicon carbide is further preferable since it has high heat resistance, excellent mechanical characteristics, and a high heat conductivity.

Furthermore, although a thickness of the partition wall in the diesel particulate filter according to this embodiment is not restricted in particular, a pressure loss at the time of passage of a fluid may be increased when the thickness of the partition wall is too large, and a strength may becomes insufficient when this thickness is too small. As the thickness of the partition wall, a range of 120 to 400 µm is preferable, and a range of 150 to 320 µm is more preferable. Moreover, the honeycomb catalytic article may have an outer peripheral wall placed on the outermost periphery thereof. It is to be noted that the outer peripheral wall may be not only an integrally formed wall that is integrally formed with the honeycomb structure at the time of forming but also a cement coat wall obtained by grinding the outer periphery of the honeycomb structure into a predetermined shape and forming the outer peripheral wall by using, e.g., a cement.

It is preferable for the substrate having the honeycomb structure to have a porosity of 40 to 80% and an average pore diameter of 5 to 80 µm. It is preferable for a porosity of the partition wall in a state where the catalyst layer is supported, i.e., a state where catalyst support pores are formed to be 40 to 80%. When the porosity is less than 40%, a pore surface area becomes insufficient, and a purification performance tends to be degraded. On the other hand, when the porosity exceeds 80%, a strength tends to become insufficient. Additionally, it is preferable for an average pore diameter of the partition wall in a state where the catalyst layer is supported, i.e., a state where catalyst support pores are formed to be 5 to 80 µm. When the average pore diameter is less than 5 µm, carbon fine particles or fine particles of ash and others contained in the exhaust gas emitted from, e.g., an engine are apt to be collected, and the pores are clogged. On the other hand, when the average pore diameter exceeds 80 µm, a contact area of the exhaust gas and the catalyst layer is hard to be sufficiently assured.

It is to be noted that the average pore diameter is measured by using a mercury porosimeter (a mercury penetration method), and it means a pore diameter calculated from a pressure when a cumulative capacity of mercury injected into the porous substrate reaches 50% of the entire pore capacity of the porous substrate. As the mercury porosimeter, one having a trade name of Auto Pore III of a type 9405 manufactured by Micrometrics Inc. can be used. Further, the porosity is also a value obtained based on the mercury penetration method, and it can be measured by using the mercury porosimeter.

As a fabrication method of the honeycomb structure, there is, e.g., the following method. However, the present invention is not restricted to such a fabrication method of the honeycomb structure, and a known fabrication method of the honeycomb structure may be used.

When the honeycomb structure is, e.g., a honeycomb segment bonded article including a plurality of honeycomb segments, the segments are bonded to each other through a bonding material, and an outer peripheral surface is ground into a desired shape, the following procedure can be adopted.

First, each honeycomb segment is fabricated. As a raw material for the honeycomb segment, for example, an SiC powder and a metal Si powder are mixed at a mass ratio of 80:20, methylcellulose, hydroxypropoxyl methylcellulose, a surfactant, and water are added to this mixture, and they are kneaded, thereby obtaining a kneaded clay having plasticity. Furthermore, the kneaded clay is subjected to extrusion forming by using a predetermined mold, thus forming a honeycomb segment formed article having a desired shape. Subsequently, the obtained honeycomb segment formed article is dried by using a microwave drier, further completely dried by using a hot-air dryer, and then subjected to plugging and firing (preliminary firing).

This preliminary firing is performed for degreasing, and there is preliminary firing performed in an oxidizing atmosphere at 550°C for approximately 3 hours, for example. However, the present invention is not restricted thereto, and effecting preliminary firing in accordance with an organic matter (e.g., an organic binder, a dispersing agent, or a pore forming agent) in the honeycomb dried article is preferable. In general, since a combustion temperature of the organic binder is approximately 100 to 300°C and a combustion temperature of the pore forming agent is approximately 200 to 800°C, setting a preliminary firing temperature to approximately 200 to 1000°C can suffice. Although a preliminary firing time is not restricted in particular, it is usually approximately 3 to 100 hours.

Moreover, firing (main firing) is carried out. This "main firing" means an operation of sintering and densifying a forming raw material in an article subjected to preliminary firing, thereby assuring a predetermined strength. Since firing conditions (temperature and /time) differ depending on a type of forming raw material, selecting appropriate conditions in accordance with each type can suffice. For example, a firing temperature when performing firing in an Ar inert atmosphere is generally approximately 1400 to 1500°C, but the present invention is not restricted thereto.

The plurality of honeycomb segments (sintered articles) each having a desired dimension can be obtained from such a process. Then, a bonding slurry obtained by kneading an aluminosilicate fiber, a colloidal silica, polyvinyl alcohol, and a silicon carbide is applied to a peripheral surface of each honeycomb segment, and the respective honeycomb segments are assembled and press-bonded to each other, and they are dried by heating, thus obtaining a honeycomb segment bonded article whose entire shape is a quadratic prism shape. Further, the honeycomb segment bonded article is processed into a columnar shape, a peripheral surface thereof is covered with an outer periphery coat layer formed of the same material as the honeycomb segment formed article, and the honeycomb segment bonded article is hardened by drying, thereby obtaining a columnar honeycomb structure having a segment structure.

As a plugging portion forming method, a plugging slurry is stored in a storage container. Furthermore, an end portion on a masked side is immersed in the storage container, and an open portion of each non-masked cell is filled with the plugging slurry to form the plugging portion. In regard to the other end portion, each cell plugged at the one end portion is subjected to masking, and the plugging portion is formed by the same method as the method of forming the plugging portion at the one end portion. As a result, in each cell that is not plugged at the one end portion, the other end portion is plugged. The cells are alternately clogged in a checkered pattern at the respective other end portions. Moreover, plugging may be performed after firing the honeycomb formed article to form the honeycomb sintered article.

It is to be noted that, when the same material as the honeycomb segment raw material is used as a plugging material, expansion coefficients of the honeycomb segments at the time of firing can be equalized, which preferably leads to an improvement durability.

Further, for example, when cordierite is used as a partition wall base material, a dispersion medium, e.g., water and a pore forming material are added to a cordierite forming raw material, and an organic binder and a dispersing agent are further added to be kneaded, thereby forming a clayey kneaded clay. Means for kneading the cordierite forming raw material (a forming raw material) to prepare the kneaded clay is not restricted in particular, and there is a method using, e.g., a kneader or a vacuum clay kneader. When firing the cordierite raw material, performing firing at 1410 to 1440°C is preferable, and effecting firing for 3 to 10 hours is preferable.

Incidentally, as the forming method, it is possible to preferably use, e.g., a method of subjecting the kneaded clay prepared as explained above to extrusion forming using a die having a desired cell shape, a partition wall thickness, and a cell density.

### [2] Manufacturing Method 1 according to the Embodiment:

In an embodiment of the manufacturing method of the catalytic diesel particulate filter according to the present invention, it is desirable to perform manufacture by coating the substrate constituted of the honeycomb structure with the ceria based catalyst including no noble metal to form the coat layer, drying this coat layer, and then coating the coat layer with the catalyst including the noble metal.

More specifically, the catalyst is supported in the thus obtained honeycomb structure. In an embodiment of the manufacturing method of the catalytic diesel particulate filter according to this embodiment, the substrate constituted of the honeycomb structure is coated with the ceria based catalyst including no noble metal to form the coat layer, this coat layer is dried, and then the coat layer is coated with the catalyst including the noble metal. However, the catalyst support method is not restricted in particular, and the catalyst can be supported based on a known method. For example, first, a slurry of the catalyst that contains the ceria based catalyst including no noble metal is prepared in advance, and a slurry of the catalyst that contains the catalyst including the noble metal is also prepared in advance. Coating is effected with respect to a surface of the partition wall and an inner surface of the pores of the partition wall in the honeycomb structure based on a method such as dipping or suction method, and the honeycomb structure is dried at a room temperature or under heating conditions. Subsequently, the surface of the partition wall and the inner surface of the pores of the partition wall in the honeycomb structure are coated with the slurry of the catalyst containing the ceria based catalyst based on the method, e.g., the suction method, and the honeycomb structure is dried at a room temperature or under heating conditions like a drying process of the ceria based catalyst. The honeycomb catalytic article according to this embodiment can be manufactured through such a series of manufacturing processes.

### [3] Manufacturing Method 2 according to the Embodiment:

As another embodiment of the manufacturing method of the catalytic diesel particulate filter, a process of drying the coat layer, subjecting the same to preliminary firing to be burned, and then coating the coat layer with the catalyst including the noble metal is also a preferred conformation of the manufacturing method. Since the ceria based catalyst including no noble metal is firmly supported in the pores by firing, it is possible to completely prevent the ceria based catalyst from being delaminated or eluted due to the slurry when dipping or sucking the catalyst slurry including the noble metal. The manufacturing method 2 according to this embodiment will now be specifically explained hereinafter, but the manufacturing method 2 according to this embodiment is different from the above-explained manufacturing method 1 in the catalyst supporting method alone, and these methods have the same manufacturing processes for the honeycomb structure. Therefore, the catalyst supporting method alone will be explained hereinafter, and a description on other manufacturing processes will be omitted. Thus, please refer to the above-described manufacturing method of the honeycomb structure for information about the other manufacturing processes.

First, in the manufacturing method 2 according to this embodiment, a slurry of the catalyst that contains the ceria based catalyst including no noble metal is prepared in advance, and then a surface of the partition wall and an inner surface of the pores of the partition wall in the obtained honeycomb structure are coated with this slurry based on a method such as dipping or a suction method like the manufacturing method 1. Then, the honeycomb structure is dried at a room temperature or under heating conditions. Further, preliminary firing is performed under firing conditions (one hour at 550°C) to burn the honeycomb structure. Subsequently, a prepared slurry of the catalyst that contains the catalyst including the noble metal is applied to the surface of the partition wall and the inner surface of the pores of the partition wall in the honeycomb structure fired with the ceria based catalyst including no noble metal thereon, and this honeycomb structure is dried at a room temperature or under heating conditions, thereby manufacturing the honeycomb catalytic article according to this embodiment.

It is to be noted that the present invention is not restricted these manufacturing methods. For example, the ceria based catalyst may be applied after outer diameter processing, an outer periphery coat material may be applied, then firing using the ceria based catalyst may be carried out simultaneously with drying of the outer periphery coat, and subsequently the noble metal based catalyst may be applied to effect coating of the respective catalysts, thereby manufacturing a desired honeycomb catalytic article.

### [Examples]

The present invention will now be specifically explained based on examples hereinafter, but the present invention is not restricted to these examples. It is to be noted that "part" and "%" in the following examples and comparative examples means part by mass and mass% unless stated. Further, various kinds of evaluations and measurements in examples were performed based on the following method.

### [1] Honeycomb Structure:

In each of the examples and the comparative examples, the following honeycomb structure was used to constitute a catalytic diesel particulate filter.

### (Example 1) Integral Structure SiC:

A mixed powder containing 80 mass% of an SiC powder and 20 mass% of a metal Si powder was used as a raw material, methylcellulose, hydroxypropoxyl methylcellulose, a surfactant, and water were added to this mixed powder to fabricate a kneaded clay having plasticity, and the obtained kneaded clay was subjected to extrusion forming by an extruder, thereby being formed into a honeycomb shape having an integral structure SiC (a diameter of 144 mm and a length of 152 mm, 12 mil/300 cpsi, a porosity of 50%, an average pore diameter of 15 µm). Then, this formed article was dried by using microwaves and hot air, and this honeycomb segment formed article was subjected to firing in an oxidizing atmosphere at a firing temperature of 1700°C for 2 hours, thus obtaining a honeycomb formed article.

Subsequently, as a ceria based catalyst, ion-exchanged water, 6 g/L of a cerium oxide, 1 g/L of a zirconium acetate, and 3 g/L of a praseodymium oxide were mixed and ground by a pot mill for 48 hours, and then an alumina sol was mixed in the obtained mixture so that the alumina sol can occupy 5% of a solid content, thereby obtaining a catalyst slurry.

The honeycomb structure was coated with the following ceria based catalyst (a ceria based catalyst including no noble metal) based on dipping, and calcined (fired to fix a catalyst) at 600°C. It is to be noted that a catalyst coat amount was 20 g/L based on a difference in weight before and after coating.

Further, a catalyst slurry including a noble metal was prepared in advance. As the noble metal based catalyst, 18 g/L of an alumina(γ-Al₂O₃) powder was impregnated with and supported by 2 g/L of a dinitrodiammineplatinum (II) nitric acid solution, this mixture was fired at 550°C for 3 hours, ion-exchanged water was added to an obtained material so that a solid content can occupy 40%, this material was ground by a pot mill for 120 hours, and mixed with 1.5 g/L of a zirconium acetate. Furthermore, grinding was performed for 48 hours, and an alumina sol was mixed in an obtained material so that the alumina sol can form 5% of a solid content, thereby obtaining a catalyst slurry.

This catalyst slurry including the noble metal was applied to the honeycomb coated with the above-explained ceria based catalyst, and the honeycomb was calcined at 500°C. It is to be noted that this catalyst coat amount was 10 g/L.

It is to be noted that an average pore diameter was measured by using a mercury porosimeter (a mercury penetration method), and it means a pore diameter calculated from a pressure when a cumulative capacity of mercury injected into a porous substrate reaches 50% of the entire pore capacity of the porous substrate. As the mercury porosimeter, one having a trade name of Auto Pore III of a type 9405 manufactured by Micrometrics Inc. can be used. Further, the porosity is also a value obtained based on the mercury penetration method, and it was measured by using the mercury porosimeter.

Open end portions on one side and open end portions on the other side of a plurality of cells are alternately plugged in the honeycomb structure coated with the ceria based catalyst and the catalyst including the noble metal. It is to be noted, in regard to this plugging, masking is alternately performed with respect to cell open portions in end faces on one side of the obtained honeycomb formed article in a checkered pattern, and the end portions on the masked side are immersed in a plugging slurry containing a cordierite forming raw material, thereby forming the plugging portions alternately arranged in the checkered pattern. Moreover, in regard to the other end portions, masking is performed with respect to the cells plugged at the end portions on the one side, and the plugging portions are formed by the same method as the method of forming the plugging portions at the end portions on the one side. The catalytic diesel particulate filter according to Example 1 was obtained through such a series of processes.

### (Example 2) Bonded Structure:

A mixed powder containing 80 mass% of an SiC powder and 20 mass% of a metal Si powder was used as a raw material, methylcellulose, hydroxypropoxyl methylcellulose, a surfactant, and water were added to this mixed powder to fabricate a kneaded clay having plasticity, and the obtained kneaded clay was subjected to extrusion forming by an extruder, thereby obtaining sixteen 35-mm-square segments. Preliminary firing for degreasing was effected in an oxidizing atmosphere at 550°C for 3 hours, the obtained honeycomb segments were entirely bonded by using a predetermined bonding material, and then firing was carried out in the oxidizing atmosphere at a firing temperature of 1400°C for 2 hours. Additionally, an outer peripheral portion was ground to obtain a honeycomb segment of a diameter of 144 mm and a length of 152 mm. A cell structure of the obtained honeycomb segment has 12 mil, 300 cpsi, a porosity of 50%, and an average pore diameter of 15 µm.

Then, the honeycomb segment was likewise coated with a ceria based catalyst and a catalyst containing a noble metal that have the same components as those in Example 1, and calcined at 500°C. It is to be noted that this catalyst coat amount was 10 g/L. Further, plugging portions were formed by the same method as that in Example 1, thus obtaining a catalytic diesel particulate filter according to Example 2.

### (Example 3) Structure having High Inlet Cell Capacity:

A mixed powder containing 80 mass% of an SiC powder and 20 mass% of a metal Si powder was used as a raw material, methylcellulose, hydroxypropoxyl methylcellulose, a surfactant, and water were added to this mixed powder to fabricate a kneaded clay having plasticity, and the obtained kneaded clay was subjected to extrusion forming by an extruder, thereby being formed into a honeycomb shape having an integral structure Sic (a diameter of 144 mm and a length of 152 mm, a porosity of 50%, an average pore diameter of 15 µm). Then, this formed article was dried by using microwaves and hot air, and this honeycomb segment formed article was subjected to firing in an oxidizing atmosphere at a firing temperature of 1700°C for 2 hours, thus obtaining a honeycomb formed article. There was obtained a honeycomb structure having a cell structure that has an octagonal shape at an inlet (a gas inlet), a square shape at an outlet (a gas outlet), 12 mil, 300 cpsi, and an offset of 0.1 mm.

Thereafter, the honeycomb structure was likewise coated with a ceria based catalyst and a catalyst including a noble metal that have the same components as those in Example 1, and calcined at 500°C. It is to be noted that this catalyst coat amount was 10 g/L. Moreover, plugging portions were formed by the same method as that in Example 1, thus obtaining a catalytic diesel particulate filter according to Example 3.

### (Example 4) Bonded Structure + Structure having High Inlet Cell Capacity:

A mixed powder containing 80 mass% of an SiC powder and 20 mass% of a metal Si powder was used as a raw material, methylcellulose, hydroxypropoxyl methylcellulose, a surfactant, and water were added to this mixed powder to fabricate a kneaded clay having plasticity, and the obtained kneaded clay was subjected to extrusion forming by an extruder, thereby obtaining sixteen 35-mm-square segments. Preliminary firing for degreasing was effected in an oxidizing atmosphere at 550°C for 3 hours, the obtained honeycomb segments were entirely bonded by using a predetermined bonding material, and then firing was carried out in the oxidizing atmosphere at a firing temperature of 1400°C for 2 hours. Additionally, an outer peripheral portion was processed to obtain a honeycomb segment of a diameter of 144 mm and a length of 152 mm. A cell structure of the obtained honeycomb segment has an octagonal shape at an inlet (a gas inlet), a square shape at an outlet (a gas outlet), 12 mil, 300 cpsi, an offset of 0.1 mm, a porosity of 50%, and an average pore diameter of 15 µm.

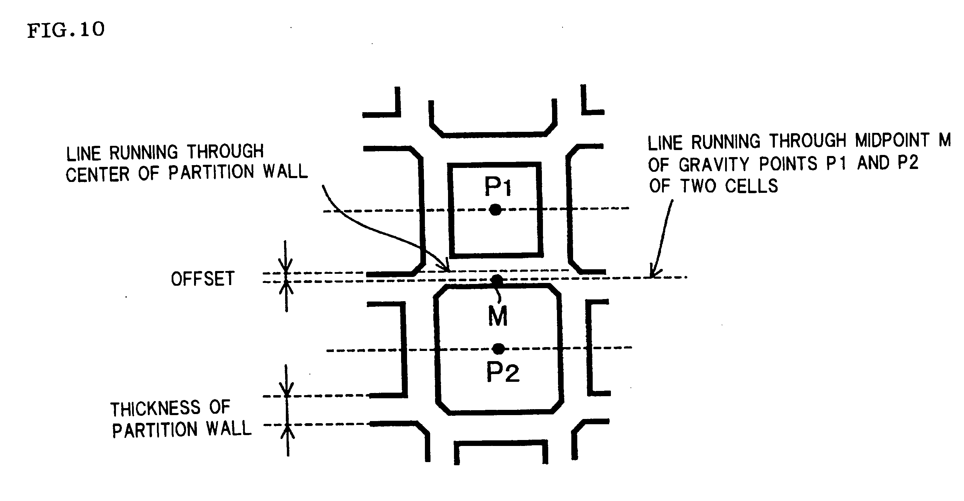

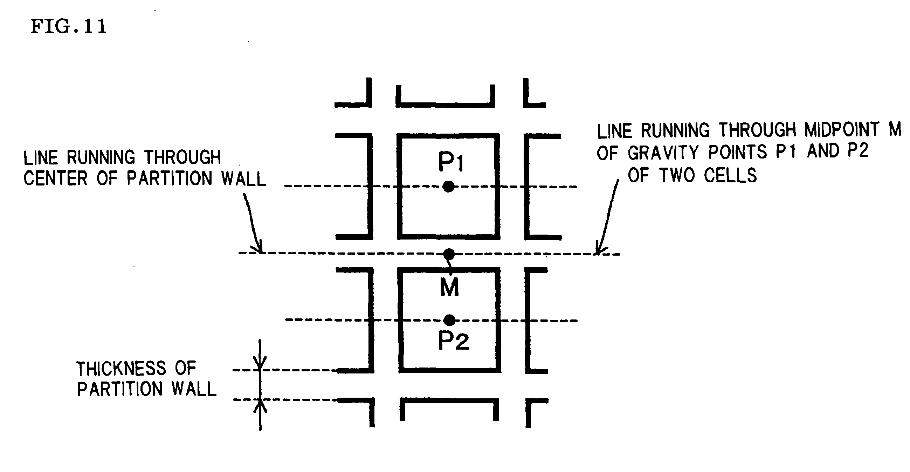

It is to be noted that the offset means a distance between a midpoint of gravity points of two cells that appear on an end face and are adjacent to each other and a center of a partition wall between the two cells. FIGS. 10 and 11 are views for mainly explaining the offset. Of these drawings, FIG. 10 is a front view (a view showing an end face) showing a part of a plugged honeycomb structure including octagonal and square cells in an enlarging manner, and FIG. 11 is a front view (a view showing an end face) showing a part of a plugged honeycomb structure including square cells alone in an enlarging manner. As shown in FIGS. 10 and 11, when the honeycomb structure includes cells having octagonal and square shapes (different shapes), a midpoint of gravity points of two cells that appear on an end face and are adjacent to each other does not overlap a center of a partition wall between the two cells, a distance is produced, and an offset is not zero. On the other hand, when the honeycomb structure includes cells having a square shape alone (the same shape), a midpoint of gravity points of two cells that appear on an end face and are adjacent to each other overlaps a center of a partition wall between the two cells, and an offset at this moment is zero.

Then, the honeycomb structure was likewise coated with a ceria based catalyst and a catalyst including a noble metal having the same components as those in Example 1, and calcined at 500°C. It is to be noted that this catalyst coat amount was 10 g/L. Additionally, plugging portions were formed by the same method as that in Example 1, thereby obtaining a catalytic diesel particulate filter according to Example 4.

### (Comparative Example 1) Integral Structure SiC:

A powder f potsherd (a main crystal phase is cordierite) obtained by grinding a cordierite fired article or talc, kaolin clay, and alumina as a raw material were blended as a raw material, 6 parts by mass of methylcellulose, 2.5 parts by mass of a surfactant, and 24 parts by mass of water were added as an organic binder to 100 parts by mass of these powders, and they were homogeneously mixed and kneaded to obtain a kneaded clay. The kneaded clay was supplied to an extruder to obtain a completed article having an integral structure Sic (a diameter of 144 mm and a length of 152 mm, 12 mil, and 300 cpsi), a porosity of 50%, and an average pore diameter of 15 µm.

Subsequently, a catalyst slurry including a noble metal and ceria was prepared for the completed article in advance. The prepared catalyst slurry is as follows. As components of the catalyst, 2 g/L of a dinitrodiammineplatinum (II) nitric acid solution [Pt(NO₂)₂(MH₃)₂] sol was immersed in and supported by 18 g/L of an alumina (γ-Al₂O₃ ) powder, and they were calcined at 550°C for 3 hours. Ion-exchanged water was added to an obtained material in such a manner that a solid content can occupy 40%, and the material was ground in a pot mill for 120 hours, then mixed with 6 g/L of a cerium oxide CeO₂, 2.5 g/L of a zirconium acetate ZrO(CH₃COO), and 3 g/L of a praseodymium oxide Pr₆O₁₁, and further ground for 48 hours. An alumina sol was added to an obtained material in such a manner the alumina sol can occupy 5% of a solid content, thereby acquiring the catalyst slurry.

The completed article was coated with the above-explained catalyst slurry based on dipping and calcined at 500°C. It is to be noted that a catalyst coat amount was 30 g/L based on a difference in weight before and after coating. In this manner, a honeycomb according to Comparative Example 1 was obtained.

### (Comparative Example 2) Integral Structure SiC:

A powder f potsherd (a main crystal phase is cordierite) obtained by grinding a cordierite fired article or talc, kaolin clay, and alumina as a raw material were blended as a raw material, 6 parts by mass of methylcellulose, 2.5 parts by mass of a surfactant, and 24 parts by mass of water were added as an organic binder to 100 parts by mass of these powders, and they were homogeneously mixed and kneaded to obtain a kneaded clay. The kneaded clay was supplied to an extruder to obtain a completed article having an integral structure SiC (a diameter of 144 mm and a length of 152 mm), a porosity of 50%, an average pore diameter of 15 µm, and a cell structure that has an octagonal shape at an inlet and a square shape at an outlet, 12 mil, 300 cpsi, and an offset 0.1 mm. Then, the completed article was coated with a catalyst to obtain a honeycomb according to Comparative Example 2. It is to be noted that a catalyst coat method is the same as that in Comparative Example 1.

The thus obtained catalytic DPFs according to Examples 1 to 4 and Comparative Examples 1 and 2 are subjected to the following catalyst distribution observation and experiment.

### (Catalyst Distribution Observation)

A catalyst distribution of the catalytic DPF according to each of Examples 1 to 4 and Comparative examples 1 and 2 was observed as follows. First, the structure coated with the catalyst was dismantled (samples were collected from arbitrary positions in an upstream region, a middle region, and a downstream region of the DPF) to be filled with a resin, and a polished surface was observed by using an SEM (a scanning electron microscope). Specifically, a magnification of the SEM was increased to 1000 magnifications to observe a washcoat layer portion. In this observation, a judgment was made on whether Pt, Pd, or Rh can be detected in the washcoat layer having a thickness of 1 to 20 µm based on EDX analysis, and the washcoat layer in which such materials cannot be detected was determined as a ceria layer. Then, analysis was performed based on EDX (energy dispersive X-ray fluorescence analysis). Specifically, whether a noble metal component, i.e., Pt, Pd, or Rh is included in one washcoat layer was confirmed based on the EDX analysis. The washcoat layer including no noble metal component was not found in Comparative Examples 1 and 2, whereas the washcoat layer in which the noble metal component is not detected was found in Examples 1 to 4. It is to be noted that the upstream region of the DPF means a region of a gas inlet of the honeycomb and the vicinity thereof, the downstream region of the DPF means a region of a gas outlet of the honeycomb and the vicinity thereof, and the middle region of the DPF means a remaining region excluding the upstream region of the DPF and the downstream region of the DPF.

It is to be noted that a product having a trade name "S-3200N" (manufactured by Hitachi Ltd.) was used as a measuring instrument of the SEM, and a product having a trade name "EMAX-5770W" (manufactured by Horiba Ltd.,) was utilized as a measuring instrument of the EDX analysis to perform analysis. However, measuring instruments of the SEM and the EDX analysis are not restricted these measuring instruments, and known instruments can be extensively used.

### (Experiment 1)

The catalytic DPF according to each of Examples 1 to 4 and Comparative Examples 1 and 2 was mounted in a 2.0 L diesel engine. As an engine operating condition, 2000 rpm×50 Nm was maintained " and 6 g/L of soot was deposited. Subsequently, a DPF inlet gas temperature was increased to (1) 650°C, (2) 690°C, or (3) 610°C based on post-injection under the same engine condition, this temperature was maintained for 10 minutes, then the post-injection was terminated, and the DPF according to each of Comparative Examples and Examples was removed after turning off the engine. Then, soot amounts deposited before and after a post-injection test were measured by measuring weights before and after the test, and a regeneration efficiency was calculated by using these values. Further, whether cracks were formed in an outlet end face was observed by sight or by a magnifier after the test. Table 1 shows this result.

It is to be noted that the DPF inlet gas temperature was increased to (1) 650°C, (2) 690°C, or (3) 610°C to perform measurement because the DPF inlet gas temperature has a fluctuation of approximately 650±40°C (the fluctuation corresponds to four σ) due to a fluctuation in control such as a fuel injection amount, but the DPF inlet gas temperature is controlled to 650°C in regular regeneration processing. Therefore, the test was conducted at a central temperature (650°C) in (1), the test was effected at upper limit and lower limit temperatures in (2) and (3), and evaluation was performed at the respective temperatures.

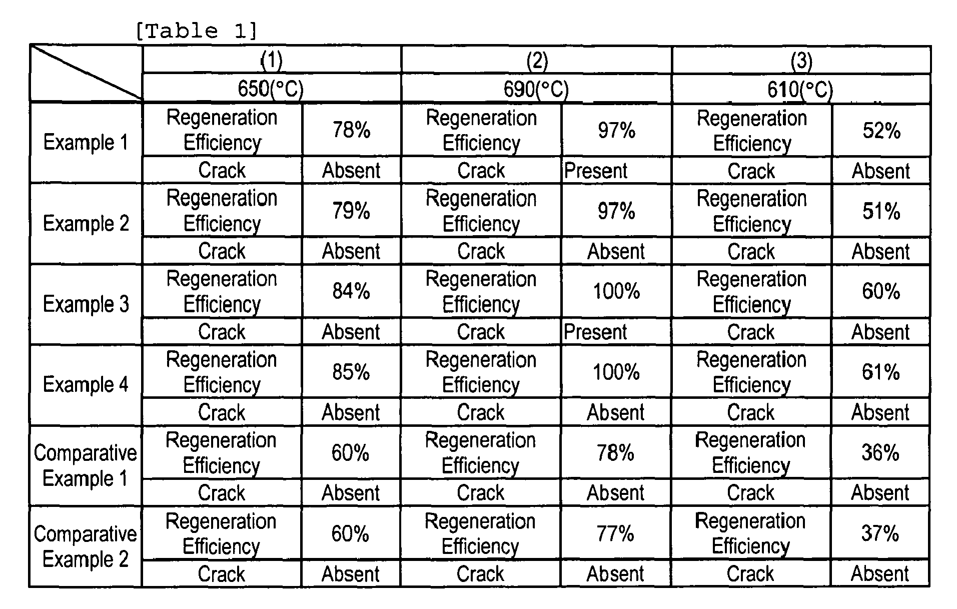

### (Discussion 1)

In regard to the regeneration efficiency and presence/absence of a crack, the result obtained from Experiment 1 was considered, and the following results were acquired in relation to Examples 1 to 4.

### (Discussion on Example 1)

In the DPF according to Example 1, the regeneration efficiency was 78% when the inlet gas temperature of the DPF was set to (1) 650°C to conduct the test, the regeneration efficiency was 97% when the inlet gas temperature of the DPF was set to (2) 690°C to conduct the test, and the regeneration efficiency was 52% when the inlet gas temperature of the DPF was set to (3) 610°C to conduct the test. The regeneration efficiency was improved in each temperature region and the excellent result was obtained by separating the ceria based catalyst coat layer and the noble metal based catalyst coat layer from each other.

Further, in regard to presence/absence of a crack, no crack was produced when the inlet gas temperature of the DPF was set to (1) 650°C and when the same was set to (3) 610°C in Example 1, but a crack was produced when the inlet gas temperature of the DPF was set to (2) 690°C. It can be considered that a crack was produced in the DPF outlet end face due to a thermal stress since combustion of soot is quick and a temperature distribution in the DPF is increased when the inlet gas temperature of the DPF is increased to 690°C. However, the inlet gas temperature of the DPF fluctuates at the time of regeneration as explained above, and the crack was produced at (2) 690°C which is the upper limit of the inlet gas temperature of the DPF (corresponding to four σ). Therefore, a frequency that such an upper limit temperature is reached within a life cycle is very low in actual use. If the upper limit temperature is reached and an end face crack is produced, PMs do not leak. That is, development may be slightly possible due to repetition, but a possibility that a repetition upper limit is reached with a frequency corresponding to four σ is very low. Therefore, it can be said that formability of the DPF with which a great improvement in regeneration efficiency and durability with respect to a thermal stress, e.g., a crack can be expected was verified from the result of Example 1.

### (Discussion on Example 2)

In the DPF according to Example 2, the regeneration efficiency was 79% when the inlet gas temperature of DPF was set to (1) 650°C to conduct the test, the regeneration efficiency was 97% when the inlet gas temperature of the DPF was set to (2) 690°C to conduct the test, and the regeneration efficiency was 51% when the inlet gas temperature of the DPF was set to (3) 610°C to conduct the test. The regeneration efficiency was improved in each temperature region and the excellent result was obtained by separating the ceria based catalyst coat layer and the noble metal based catalyst coat layer from each other.

Furthermore, in regard to presence/absence of a crack, no crack was produced when the inlet gas temperature of the DPF was set to any one of set temperatures, i.e., (1) 650°C, (2) 690°C, and (3) 610°C in Example 2, and an excellent result was obtained. That is, in case of adopting a structure where the ceria based catalyst coat layer is separated from the noble metal based catalyst coat layer like Example 1, especially a structure where the washcoat layer in which no noble metal component is detected is formed, there is some uncertainty that a crack may be possibly produced due to durability with respect to a thermal stress when the DPF constituted of the integral structure SiC is used in a region having a high inlet gas temperature (an upper limit value of regeneration control over a vehicle). However, in case of forming the DPF having the bonded structure like the DPF according to Example 2, it can be said that the structure in which the ceria based catalyst coat layer is separated from the noble metal based catalyst layer, especially the structure the washcoat layer in which no noble metal component is detected is formed is coupled with its bonded structure, and formability of the DPF with which a great improvement in regeneration efficiency and durability with respect to a thermal stress, e.g., a crack can be expected was verified.

### (Discussion on Example 3)

In the DPF according to Example 3, the regeneration efficiency was 84% when the inlet gas temperature of the DPF was set to (1) 650°C to conduct the test, the regeneration efficiency was 100% when the inlet gas temperature of the DPF was set to (2) 690°C to conduct the test, the regeneration efficiency was 60% when the inlet gas temperature of the DPF was set to (3) 610°C to conduct the test, and the excellent result was obtained. It is considered that an area of the partition wall partitioning inlet cells and outlet cells through which a gas can pass is reduced by not only separating the ceria based catalyst coat layer from the noble metal based catalyst coat layer but also adopting the cell structure where an inlet cell capacity is larger than an outlet cell capacity, and hence a flow rate of the gas passing through the partition wall is increased, namely, more oxygen is supplied, whereby a combustion speed can be improved.

Moreover, in regard to presence/absence of a crack, no crack was produced when the inlet gas temperature of the DPF according to Example 3 was set to (1) 650°C and (3) 610°C, but a crack was produced when the inlet gas temperature of the DPF according to the same was set to (2) 690°C. It is considered that, when the inlet gas temperature of the DPF is increased to 690°C, a temperature distribution in the DPF is increased since combustion of soot is fast, and a crack is produced on a DPF outlet end face due to a thermal stress. That is, it was verified that a crack may be possibly produced because of durability with respect a thermal stress at the time of using the DPF in a region having a high inlet gas temperature (an upper limit value of regeneration control over a vehicle) when the cell structure in which an inlet cell capacity is larger than an outlet cell capacity alone is utilized in case of adopting the structure where the ceria based catalyst coat layer is separated from the noble metal based catalyst coat layer like Example 3, especially the structure where the washcoat layer in which no noble metal component is detected is formed.

### (Discussion on Example 4)

In the DPF according to Example 4, the regeneration efficiency was 85% when the inlet gas temperature of the DPF was set to (1) 650°C, the regeneration efficiency was 100% when the inlet gas temperature of the DPF was set to (2) 690°C, the regeneration efficiency was 61% when the inlet gas temperature of the DPF was set to (3) 610°C, and the excellent result was obtained. It is considered that, since an area of the partition wall partitioning inlet cells and outlet cells through which a gas can pass is reduced by not only separating the ceria based catalyst coat layer from the noble metal based catalyst coat layer but also adopting the cell structure where an inlet cell capacity is larger than an outlet cell capacity, and hence a flow rate of the gas passing through the partition wall is increased, namely, more oxygen is supplied, whereby a combustion speed can be improved.

Additionally, in regard to presence/absence of a crack, no crack was produced when the inlet gas temperature of the DPF was set to any one of set temperatures, i.e., (1) 650°C, (2) 690°C, and (3) 610°C in Example 4, and an excellent result was obtained. That is, in case of adopting a structure where the ceria based catalyst coat layer is separated from the noble metal based catalyst coat layer like Example 1, especially a structure where the washcoat layer in which no noble metal component is detected is formed, there is some uncertainty that a crack may be possibly produced due to durability with respect to a thermal stress when the DPF formed of the integral structure SiC is used in a region having a high inlet gas temperature (an upper limit value of regeneration control over a vehicle). Further, when just adopting the cell structure where an inlet cell capacity is larger than an outlet cell capacity like Example 3, a crack may be possibly produced due to durability with respect to a thermal stress at the time of using the DPF in a region having a high inlet gas temperature (an upper limit value of regeneration control over a vehicle). However, like the DPF according to Example 4, when the structure where the ceria based catalyst coat layer is separated from the noble metal based catalyst coat layer, especially the structure where the washcoat layer in which no metal component is detected is formed and the cell structure where an inlet cell capacity is larger than an outlet cell capacity like Example 3 are adopted, a processing capacity of the catalyst can be further increased in cooperation with the cell structure where the inlet cell capacity is larger than the outlet cell capacity. That is, an area of the partition wall partitioning inlet cells and outlet cells through which a gas can pass is reduced, a flow rate when passing through the partition wall can be increased to supply more oxygen, and a combustion speed can be improved. Furthermore, not only the regeneration efficiency can be greatly improved, but also durability with respect to a thermal stress, e.g., a crack can be enhanced based on a synergy effect obtained from the bonded structure. As explained above, the fact that the DPF having both the regeneration efficiency and the durability can be formed was backed up.

### (Discussion on Comparative Example 1)

In the DPF according to Comparative Example 1, the regeneration efficiency was 60% when the inlet gas temperature of the DPF was set to (1) 650°C, the regeneration efficiency was 78% when the inlet gas temperature of the same was set to (2) 690°C, the regeneration efficiency was 36% when the inlet gas temperature of the same was set to (3) 610°C. The fact that the regeneration efficiency is very poor and the DPF were not used was backed up. It is considered that processing capacities inherent to the ceria based catalyst and the noble metal based catalyst cannot be sufficiently exercised since the ceria based catalyst coat layer and the noble metal based catalyst coat layer were supported without being separated from each other as different from Example 1.

Incidentally, in regard to presence/absence of a crack, no crack was found when the inlet gas temperature of the DPF according to Comparative Example 1 was set to any one of set temperatures, i.e., (1) 650°C, (2) 690°C, and (3) 610°C. It is considered that a crack was not produced since a temperature distribution in the DPF was small (and hence the regeneration efficiency was very poor) and an influence of a thermal stress on a DPF outlet end surface was small even in case of the DPF constituted of the integral structure SiC when such a conventional catalyst as that supported in Comparative Example 1 was utilized.

### (Discussion on Comparative Example 2)

In the DPF according to Comparative Example 2, the regeneration efficiency was 60% when the inlet gas temperature of the DPF was set to (1) 650°C, the regeneration efficiency was 77% when the same was set to (2) 690°C, and the regeneration efficiency was 37% when the same was set to (3) 610°C. The fact that the regeneration efficiency is very poor and this DPF cannot be used was backed up. It is considered that, since the conventional catalyst supported without separating the ceria based catalyst coat layer from the noble metal based catalyst coat layer was used as different from Example 1, an oxygen concentration at the time of soot combustion remained low, and a temperature was a dominant factor in soot combustion. Therefore, it was verified that, even if the same cell structure as that in Example 3 is included, processing capacities inherent to the ceria based catalyst and the noble metal based catalyst cannot be sufficiently exercised in the DPF according to Comparative Example 2 and the regeneration efficiency becomes poor.

Incidentally, in regard to presence/absence of a crack, no crack was found in any situation where the inlet gas temperature of the DPF according to Comparative Example 2 was set to (1) 650°C, (2) 690°C, or (3) 610°C. It is considered that no crack was produced since a temperature distribution in the DPF was small (and hence the regeneration efficiency was very poor) and an influence of a thermal stress on a DPF outlet end face was small even if such a conventional supported catalyst like that according to Comparative Example 2 is used in the DPF constituted of the integral structure Sic.

The catalytic diesel particulate filter and the manufacturing method thereof according to the present invention can be preferably utilized to collect or purify particulates contained in an exhaust gas emitted from an internal combustion engine including a diesel engine, an engine for an ordinary vehicle, and an engine for a large vehicle such as a truck or a bus and various kinds of combustion apparatuses.

## Claims

1. A catalytic diesel particulate filter that is arranged in an exhaust system of a diesel engine and includes a catalyst that burns a particulate matter contained in an exhaust gas from the diesel engine,
wherein the catalyst is configured in such a manner that a ceria based catalyst coat layer containing no noble metal and a noble metal based catalyst coat layer containing a noble metal are separately present on a substrate constituted of a honeycomb structure.

2. The diesel particulate filter according to claim 1, wherein each of the ceria based catalyst coat layer and the noble metal based catalyst coat layer is a washcoat layer supported by a metal oxide.

3. The diesel particulate filter according to claim 1, wherein a portion where the ceria based catalyst coat layer is covered with the noble metal based catalyst coat layer, a portion where the ceria based catalyst coat layer and the noble metal based catalyst coat layer are partially in contact with each other, and a portion where the ceria based catalyst coat layer and the noble metal based catalyst coat layer are not in contact with each other are present.

4. The diesel particulate filter according to any one of claims 1 to 3, wherein the ceria based catalyst coat layer and the noble metal based catalyst coat layer are separately present on an SiO₂ film.

5. The diesel particulate filter according to any one of claims 1 to 4, wherein the ceria based catalyst coat layer contains CeO₂ and at least one alkaline-earth metal other than CeO₂ or a transition metal.

6. The diesel particulate filter according to any one of claims 1 to 5, wherein the substrate constituted of the honeycomb structure includes many through holes that are partitioned by a partition wall and pass through in an axial direction.

7. The diesel particulate filter according to any one of claims 1 to 5, wherein the substrate constituted of the honeycomb structure is formed of an assembled articles obtained by integral bonding through a bonding material a plurality of honeycomb segments having many through holes that are partitioned by a partition wall and pass through in an axial direction.

8. The diesel particulate filter according to claim 6 or 7, wherein open portions of predetermined through holes are plugged at end faces on one side, and open portions of some or all of the remaining through holes are plugged at end faces on the other side.

9. The diesel particulate filter according to any one of claims 6 to 8, wherein the diesel particulate filter has a structure in which an open area of inlet-side through holes is larger than an open area of outlet-side through holes.

10. The diesel particulate filter according to any one of claims 6 to 9, wherein a cross section of each inlet-side through hole vertical to the axial direction has an octagonal shape, and a cross section of each outlet-side through hole vertical to the axial direction has a square shape.

11. The diesel particulate filter according to any one of claims 1 to 10, wherein the substrate constituted of the honeycomb structure is one selected from a group including silicon carbide, cordierite, aluminum titanate, and mullite.

12. The diesel particulate filter according to any one of claims 1 to 11, wherein the substrate constituted of the honeycomb structure has a porosity of 40 to 80% and an average pore diameter of 5 to 80 µm.

13. A manufacturing method of a catalytic diesel particulate filter, comprising: coating a substrate constituted of a honeycomb structure with a ceria based catalyst containing no noble metal to form a coat layer; drying the coat layer; and coating the coat layer with a catalyst containing a noble metal.

14. The manufacturing method of a catalytic diesel particulate filter according to claim 13, wherein the coat layer is coated with the catalyst containing a noble metal after the coat layer is dried and then calcined to be fixed.
